# EUROPEAN PATENT SPECIFICATION

(11) **EP 3 847 852 B1**
(45) Date of publication and mention of the grant of the patent: **31.05.2023**
(21) Application number: 18930088.2
(22) Date of filing: 07.09.2018
(51) Int. Cl.: H04W 52/02, H04W 76/28

(54) **METHODS, APPARATUS AND SYSTEMS FOR CONFIGURING A DISCONTINUOUS RECEPTION IN A WIRELESS COMMUNICATION**
VERFAHREN, VORRICHTUNG UND SYSTEME ZUR KONFIGURATION EINES DISKONTINUIERLICHEN EMPFANGS IN EINER DRAHTLOSEN KOMMUNIKATION
PROCÉDÉS, APPAREIL ET SYSTÈMES DE CONFIGURATION D'UNE RÉCEPTION DISCONTINUE DANS UNE COMMUNICATION SANS FIL

(43) Date of publication of application: 14.07.2021
(73) Proprietor: ZTE Corporation, Shenzhen, Guangdong 518057 (CN)
(72) Inventor: WEI, Xingguang, Shenzhen, Guangdong 518057 (CN); HAO, Peng, Shenzhen, Guangdong 518057 (CN); HAN, Xianghui, Shenzhen, Guangdong 518057 (CN); ZHANG, Chenchen, Shenzhen, Guangdong 518057 (CN); LIANG, Yachao, Shenzhen, Guangdong 518057 (CN)
(74) Representative: Vossius & Partner Patentanwälte Rechtsanwälte mbB
(86) International application number: PCT/CN2018/104583
(87) International publication number: WO 2020/034283

(56) References cited:
- EP-A2- 2 642 799
- WO-A1-2018/129654
- CN-A- 101 841 823
- CN-A- 102 014 469
- CN-A- 102 316 562
- CN-A- 102 932 881
- US-A1- 2015 131 505
- GUANGDONG OPPO MOBILE TELECOM: "Remaining issues on bandwidth part configuration and activation", 3GPP DRAFT; R1-1715692, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nagoya, Japan; 20170918 - 20170921 11 September 2017 (2017-09-11), XP051329144, Retrieved from the Internet: URL:http://www.3gpp.org/ftp/tsg_ran/WG1_RL 1/TSGR1_AH/NR_AH_1709/Docs/ [retrieved on 2017-09-11]

## Description

### TECHNICAL FIELD

The disclosure relates generally to wireless communications and, more particularly, to methods, apparatus and systems for configuring a discontinuous reception in a wireless communication.

### BACKGROUND

In the 4th Generation (4G) and the 5th Generation (5G) mobile networks, a base station transmits Downlink Control Information (DCI) through the Physical Downlink Control Channel (PDCCH). DCI is used to schedule uplink transmission and downlink transmission of a User Equipment (UE). DCIs come in many different formats and sizes and can be mapped to different time-frequency resource locations.

Due to the suddenness of a service, the UE cannot predict when the base station will schedule its uplink and downlink transmissions. Therefore, the UE needs to continuously receive the PDCCH and perform blind detection of the DCI at different possible time-frequency resource locations by trying different DCI formats and sizes. Continuously receiving the PDCCH and blindly detecting the DCI consumes a large amount of energy for the UE.

In order to reduce the power consumption of the UE, a discontinuous reception (DRX) mechanism is introduced in both 4G and 5G communication systems. Using the DRX mechanism, the UE does not need to continuously receive the PDCCH and blindly detect the DCI in the radio resource control (RRC) connected mode. Instead, the UE receives the PDCCH and blindly detects the DCI for a period of time, then sleeps for a period of time, and then continues to receive the PDCCH and blindly detect the DCI, to save energy.

In a 5G mobile network, after a UE successfully accesses the base station and enters the RRC_CONNECTED mode, the base station configures the DRX parameters through RRC signaling. But an existing configuration of the DRX mechanism has the following problems. First, the DRX parameters are configured by RRC signaling, which induces a long configuration period such that the DRX configuration cannot be dynamically adjusted according to UE services. Second, while DRX saves energy for the UE, it also increases the communication delay of the UE and reduces the system throughput. Therefore, many operators do not even configure DRX when deploying their networks due to the increased delay of existing DRX configuration. Thus, existing systems and methods for configuring a discontinuous reception are not entirely satisfactory.

WO 2018/129654 A1 relates to a method for determining a DRX state. The method includes a terminal device receives first instruction information sent by a network device, the first instruction information being used for instructing the terminal device to switch a DRX state or indicating a time in which the terminal device is in the DRX state.

### SUMMARY OF THE INVENTION

The exemplary embodiments disclosed herein are directed to solving the issues relating to one or more of the problems presented in the prior art, as well as providing additional features that will become readily apparent by reference to the following detailed description when taken in conjunction with the accompany drawings. The invention is specified by the independent claims. Preferred embodiments are defined in the dependent claims. In accordance with various embodiments, exemplary systems, methods, devices and computer program products are disclosed herein.

In one embodiment, a method performed by a wireless communication node is disclosed. The method comprises the steps of claim 1.

In yet another embodiment, a method, as defined by claim 2 and performed by a wireless communication device is disclosed.

### BRIEF DESCRIPTION OF THE DRAWINGS

Various exemplary embodiments of the present disclosure are described in detail below with reference to the following Figures. The drawings are provided for purposes of illustration only and merely depict exemplary embodiments of the present disclosure to facilitate the reader's understanding of the present disclosure. Therefore, the drawings should not be considered limiting of the breadth, scope, or applicability of the present disclosure. It should be noted that for clarity and ease of illustration these drawings are not necessarily drawn to scale.
FIG. 1 illustrates an exemplary communication network in which techniques disclosed herein may be implemented, in accordance with some embodiments of the present disclosure.
FIG. 2 illustrates an exemplary working mechanism of discontinuous reception (DRX), in accordance with some embodiments of the present disclosure.
FIG. 3 illustrates a block diagram of a base station (BS), in accordance with some embodiments of the present disclosure.
FIG. 4A illustrates a flow chart for a method performed by a BS for configuring DRX, in accordance with some embodiments of the present disclosure.
FIG. 4B illustrates a flow chart for a method performed by a BS for configuring an energy-saving state, in accordance with some embodiments of the present disclosure.
FIG. 5 illustrates a block diagram of a user equipment (UE), in accordance with some embodiments of the present disclosure.
FIG. 6A illustrates a flow chart for a method performed by a UE for configuring DRX, in accordance with some embodiments of the present disclosure.
FIG. 6B illustrates a flow chart for a method performed by a UE for configuring an energy-saving state, in accordance with some embodiments of the present disclosure.
FIG. 7 illustrates an exemplary adjustment mechanism for DRX, in accordance with some embodiments of the present disclosure.
FIG. 8A illustrates an exemplary process of semi-persistent scheduling (SPS) under DRX, in accordance with some embodiments of the present disclosure.
FIG. 8B illustrates another exemplary process of semi-persistent scheduling (SPS) under DRX, in accordance with some embodiments of the present disclosure.

### DETAILED DESCRIPTION OF EXEMPLARY EMBODIMENTS

Various exemplary embodiments of the present disclosure are described below with reference to the accompanying figures to enable a person of ordinary skill in the art to make and use the present disclosure. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

A typical wireless communication network includes one or more base stations (typically known as a "BS") that each provides geographical radio coverage, and one or more wireless user equipment devices (typically known as a "UE") that can transmit and receive data within the radio coverage. In the wireless communication network, a BS and a UE can communicate with each other via a communication link, e.g., via a downlink radio frame from the BS to the UE or via an uplink radio frame from the UE to the BS.

The present disclosure provides a series of optimization means based on existing discontinuous reception (DRX) mechanism to improve the flexibility of the DRX mechanism and improve the energy saving effect of the UE. For example, a BS transmits a DRX configuration to a UE by RRC signaling. The BS can monitor service and/or resource information of the UE. Based on a change of a service type or a change of an active bandwidth part (BWP) of the UE, the BS may transmit an update of the DRX configuration to the UE. The update may be transmitted via a physical channel, e.g. Physical Downlink Control Channel (PDCCH). After receiving an acknowledgement from the UE with respect to the update, the BS can update the DRX configuration of the UE. In this way, the DRX configuration is dynamically updated based on current service type and/or active BWP of the UE.

In one embodiment, a BS may receive a report of a capability of a UE after the UE successfully accesses the BS. Based on the capability report, the BS can determine a set of configurations each of which corresponds to a different energy-saving level at the UE. In response to an energy-saving request from the UE, the BS may determine one of the set of configurations for the UE. The energy-saving request may be initiated by the UE itself or by a human user of the UE. After the BS transmits the determined configuration to the UE, e.g. through RRC signaling, the UE enters an energy-saving state, e.g. an energy-saving state based on a DRX configuration, according to the determined configuration. The set of configurations may include at least one configuration that indicates no need of energy saving at the UE.

In various embodiments, a BS may be referred to as a network side node and can include, or be implemented as, a next Generation Node B (gNB), an E-UTRAN Node B (eNB), a Transmission Reception Point (TRP), an Access Point (AP), a donor node (DN), a relay node, a core network (CN) node, a RAN node, a master node, a secondary node, a distributed unit (DU), a centralized unit (CU), etc. A UE in the present disclosure can be referred to as a terminal and can include, or be implemented as, a mobile station (MS), a station (STA), etc. A BS and a UE may be described herein as non-limiting examples of "wireless communication nodes;" and a UE may be described herein as non-limiting examples of "wireless communication devices." The BS and UE can practice the methods disclosed herein and may be capable of wireless and/or wired communications, in accordance with various embodiments of the present disclosure.

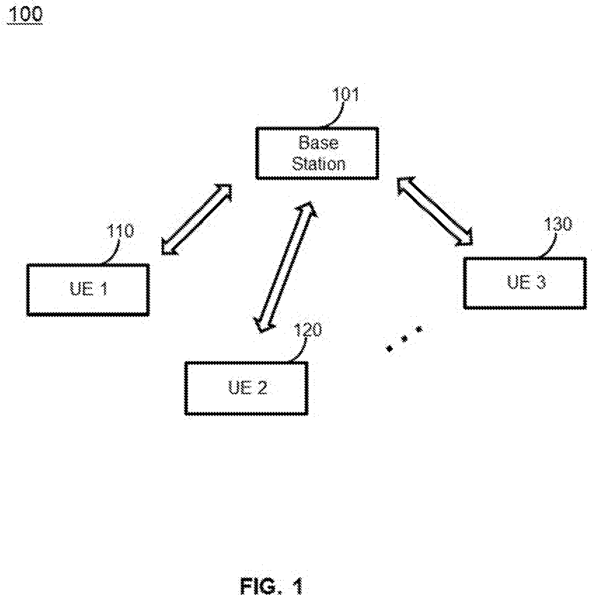

FIG. 1 illustrates an exemplary communication network 100 in which techniques disclosed herein may be implemented, in accordance with some embodiments of the present disclosure. As shown in FIG. 1, the exemplary communication network 100 includes a base station (BS) 101 and a plurality of UEs, UE 1 110, UE 2 120 ... UE 3 130, where the BS 101 can communicate with the UEs according to wireless protocols.

In one embodiment, after a UE, e.g. the UE 1 110, successfully accesses the BS 101 and enters the RRC_CONNECTED mode, the BS 101 configures the DRX parameters through RRC signaling. Main parameters of the DRX include: onDurationTimer, which indicates the duration of continuous monitoring the PDCCH from the beginning of a DRX Cycle; drx-InactivityTimer, which indicates the duration of the active state of the UE after the UE successfully decodes a PDCCH indicating the initial uplink or downlink user data, even if the UE is during an OFF Duration of DRX; longDRX-CycleStartOffset, which specifies the duration and starting offset of a long DRX cycle, including longDRX-Cycle representing the length of the long DRX cycle and drxStartOffset representing the starting offset of DRX within the longDRX-Cycle; shortDRX-Cycle, which specifies the duration of a short DRX cycle; and drxShortCycleTimer, which is a number representing a multiple of shortDRX-Cycle and specifies a time period for the UE to use shortDRX-Cycle.

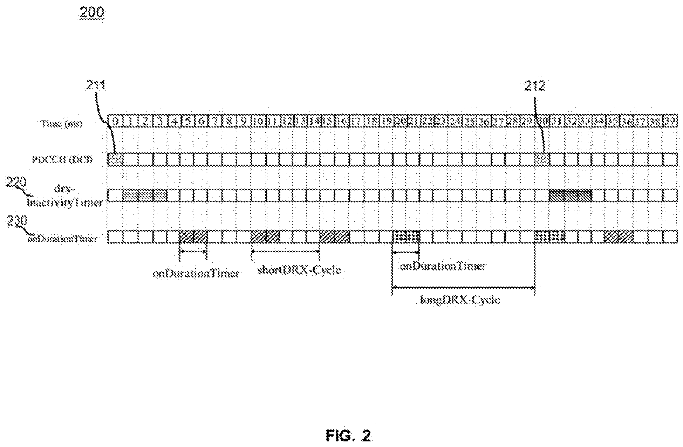

FIG. 2 illustrates an exemplary working mechanism 200 of discontinuous reception (DRX), in accordance with some embodiments of the present disclosure. In this example, it is assumed that the parameters related to DRX are configured as follows:

| Parameter: | Value: |
|---|---|
| drx-InactivityTimer | 3ms |
| onDurationTimer | 2ms |
| shortDRX-Cycle | 5ms |
| longDRX-Cycle | 10ms |
| drxStartOffset | 0 |
| drxShortCycleTimer | 3 |
| Subcarrier Spacing | 15 KHz |

In this example, the subcarrier spacing of the system is 15 kHz, with a corresponding slot length being 1 millisecond (ms). As shown in FIG. 2, the UE successfully receives the PDCCH 211, e.g. a PDCCH having a DCI for the UE, at 0 ms, and the UE starts the drx-InactivityTimer 220 in the next time slot, i.e. from 1 ms in this example. Because the drx-InactivityTimer=3 ms as shown in the above table, the UE enters a sleep state after the drx-InactivityTimer times out at 4 ms. Because the shortDRX-Cycle=5 ms as shown in the above table, the UE starts the onDurationTimer 230 at the time of 5 ms. In this example, the UE does not receive any PDCCH during the active onDurationTimer having a value of 2 ms as shown above, such that the UE goes to sleep when the onDurationTimer times out at 7 ms. If the UE receives the PDCCH during the onDurationTimer, the UE will start the drx-InactivityTimer in the next time slot in which the PDCCH is received. During the next 2 short DRX cycles (10-14 ms and 15-19 ms), the UE does not receive the PDCCH during the active onDurationTimer.

At the time of 20 ms, since the UE does not receive the PDCCH in the previous consecutive three (drxShortCycleTimer=3 as shown above) short DRX cycles, the UE starts to enter a long DRX cycle. The long DRX cycle has the same onDurationTimer duration as that of the short DRX cycle. At 20 ms, the UE starts the onDurationTimer but has not received the PDCCH, and then the UE goes to sleep at 22 ms. The onDurationTimer is started at 30 ms after the UE sleeps for 8 ms (longDRX-Cycle - onDurationTimer). Since the UE receives the PDCCH 212 at 30 ms, the UE starts the drx-InactivityTimer 220 at the next time slot, i.e. from 31 ms in this example. Because the drx-InactivityTimer=3 ms as shown in the above table, the UE enters a sleep state after the drx-InactivityTimer times out at 34 ms. Since the UE receives the PDCCH 212 in the long DRX cycle (30-39 ms), the UE transitions from the long DRX cycle to the short DRX cycle. That is, the UE wakes up again at 35 ms to try to receive the PDCCH.

To facilitate the description of the DRX mechanism, it is defined that the state at which UE needs to receive the PDCCH and blindly detect the DCI is called an ON Duration state; and the state at which the UE is in the sleep state without receiving the PDCCH and blindly detecting the DCI is called an OFF Duration state.

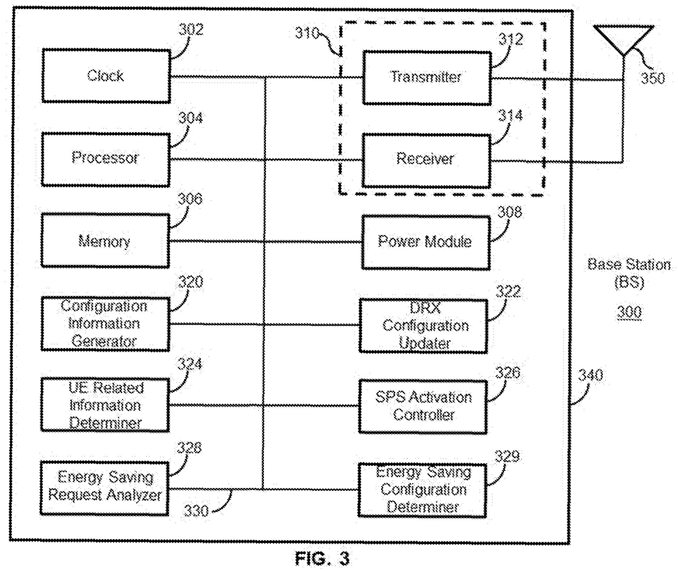

FIG. 3 illustrates a block diagram of a base station (BS) 300, in accordance with some embodiments of the present disclosure. The BS 300 is an example of a node that can be configured to implement the various methods described herein. As shown in FIG. 3, the BS 300 includes a housing 340 containing a system clock 302, a processor 304, a memory 306, a transceiver 310 comprising a transmitter 312 and receiver 314, a power module 308, a configuration information generator 320, a DRX configuration updater 322, a UE related information determiner 324, an SPS activation controller 326, an energy saving request analyzer 328, and an energy saving configuration determiner 329.

In this embodiment, the system clock 302 provides the timing signals to the processor 304 for controlling the timing of all operations of the BS 300. The processor 304 controls the general operation of the BS 300 and can include one or more processing circuits or modules such as a central processing unit (CPU) and/or any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable circuits, devices and/or structures that can perform calculations or other manipulations of data.

The memory 306, which can include both read-only memory (ROM) and random access memory (RAM), can provide instructions and data to the processor 304. A portion of the memory 306 can also include non-volatile random access memory (NVRAM). The processor 304 typically performs logical and arithmetic operations based on program instructions stored within the memory 306. The instructions (a.k.a., software) stored in the memory 306 can be executed by the processor 304 to perform the methods described herein. The processor 304 and memory 306 together form a processing system that stores and executes software. As used herein, "software" means any type of instructions, whether referred to as software, firmware, middleware, microcode, etc. which can configure a machine or device to perform one or more desired functions or processes. Instructions can include code (e.g., in source code format, binary code format, executable code format, or any other suitable format of code). The instructions, when executed by the one or more processors, cause the processing system to perform the various functions described herein.

The transceiver 310, which includes the transmitter 312 and receiver 314, allows the BS 300 to transmit and receive data to and from a remote device (e.g., another BS or a UE). An antenna 350 is typically attached to the housing 340 and electrically coupled to the transceiver 310. In various embodiments, the BS 300 includes (not shown) multiple transmitters, multiple receivers, and multiple transceivers. In one embodiment, the antenna 350 is replaced with a multi-antenna array 350 that can form a plurality of beams each of which points in a distinct direction. The transmitter 312 can be configured to wirelessly transmit packets having different packet types or functions, such packets being generated by the processor 304. Similarly, the receiver 314 is configured to receive packets having different packet types or functions, and the processor 304 is configured to process packets of a plurality of different packet types. For example, the processor 304 can be configured to determine the type of packet and to process the packet and/or fields of the packet accordingly.

In a communication system including the BS 300 serving a UE, to save energy at the UE, the BS 300 may configure a DRX mechanism for the UE. In one embodiment, the configuration information generator 320 may generate and transmit, via the transmitter 312, first configuration information to the UE. The first configuration information comprises at least one parameter related to a DRX of the UE. Then, the configuration information generator 320 may generate and transmit, via the transmitter 312, second configuration information to the UE. The second configuration information comprises an update to at least part of the first configuration information. The update may be due to a change of a service type of the UE. In one embodiment, the first configuration information is transmitted at a layer higher than that where the second configuration information is transmitted. For example, the first configuration information is carried by RRC signaling; and the second configuration information is carried by a DCI via a PDCCH.

As used herein, the term "layer" refers to an abstraction layer of a layered model, e.g. the open systems interconnection (OSI) model, which partitions a communication system into abstraction layers. A layer serves the next higher layer above it, and is served by the next lower layer below it. In the example of FIG. 3, following the OSI model, the second configuration information may be transmitted at the physical layer; while the first configuration information may be transmitted at a layer higher than the physical layer, e.g. the network layer.

In one embodiment, the configuration information generator 320 informs the UE by RRC signaling about a set of configurations related to the DRX of the UE. The second configuration information transmitted to the UE indicates one of the set of configurations for updating the DRX configuration at the UE. In another embodiment, the configuration information generator 320 determines a modification step size for at least one parameter related to DRX. The second configuration information transmitted to the UE indicates an update to the at least one parameter according to the modification step size. In yet another embodiment, the second configuration information indicates a closure of the DRX at the UE.

In one embodiment, the DCI carrying the second configuration information indicates a command to shorten an ON Duration of a DRX cycle. In this case, even if the UE misses the DCI used for adjusting the DRX parameter, the UE will only mistakenly believe that part of the OFF Duration is ON Duration, which will not affect the data transmission and reception of the UE.

The configuration information generator 320 in this example may inform the DRX configuration updater 322 about the update, such that the DRX configuration updater 322 will monitor a feedback from the UE. In one embodiment, the DRX configuration updater 322 receives an acknowledgement (ACK) from the UE with respect to the update. Then the DRX configuration updater 322 can update the DRX configuration of the UE according to the second configuration information in response to the ACK. In this way, the BS 300 and the UE have consistent understanding of DRX parameters.

According to various embodiments, an effective time of the update starts from at least one of: a next time slot after the UE receives the second configuration information, and a next DRX cycle after the UE receives the second configuration information. The update may be effective until at least one of: an end of a DRX cycle where the effective time starts, and a next update related to the DRX of the UE.

The UE related information determiner 324 in this example can determine information related to the UE. For example, the information related to the UE may include: a service type of the UE, an active bandwidth part (BWP) of the UE. Accordingly, the UE related information determiner 324 may determine there is a change of the service type of the UE, or there is a change of the active BWP of the UE. The UE related information determiner 324 may inform the determined change to the configuration information generator 320 for generating the second configuration information including the update information of the DRX configuration. According to various embodiments, the update includes information about at least one of: a reset of all timers related to DRX; a modification of at least one of a timer duration and a timer step related to DRX; and an instruction for the UE to select at least one of a timer duration and a timer step related to DRX based on at least one of: a semi-static configuration from the BS 300, and a bandwidth ratio between an old active BWP before the change and a new active BWP after the change.

The SPS activation controller 326 in this example can control an activation or deactivation of a semi-persistent scheduling (SPS) at the UE. In one example, the SPS activation controller 326 may generate and transmit, via the transmitter 312, an activation indication on SPS resource during an OFF Duration of a DRX cycle to the UE. The activation indication includes an activation downlink control information (DCI) and a wake-up signal (WUS). In another example, the SPS activation controller 326 may generate and transmit, via the transmitter 312, a deactivation indication on SPS resource during an OFF Duration of a DRX cycle to the UE. The deactivation indication includes a deactivation DCI and a go-to-sleep signal.

In one embodiment, the SPS activation controller 326 may determine an SPS timer such that the UE stops detecting SPS physical downlink shared channel (PDSCH) if the UE is in an OFF Duration of a DRX cycle at an end of the SPS timer. The SPS timer starts in response to at least one of: no detection of data in consecutive N time units on SPS resource by the UE, and an activation of SPS physical downlink control channel (PDCCH). A time unit may be a mini-slot, a slot, a subframe or an SPS periodicity.

The energy saving request analyzer 328 in this example receives, via the receiver 314, an energy-saving request from the UE. The energy-saving request may be initiated by at least one of: the UE itself and a user of the UE. The energy-saving request is received by at least one of: a radio resource control signaling, a service request (SR), a channel state information (CSI) report, and a dedicated signaling for energy-saving request. The energy saving request analyzer 328 may analyze the energy-saving request and send the request information to the energy saving configuration determiner 329 for determining an energy-saving configuration for the UE.

The energy saving configuration determiner 329 in this example may pre-determine a set of configurations each of which corresponds to a different energy-saving level at the UE. In one embodiment, the UE related information determiner 324 may receive, via the receiver 314, a report of a capability of the UE, and forward the capability information to the energy saving configuration determiner 329. The energy saving configuration determiner 329 can determine the set of configurations based on the capability of the UE. In one embodiment, the set of configurations includes at least one configuration that indicates no need of energy saving at the UE. After receiving the request information of the UE, the energy saving configuration determiner 329 may determine one of the set of configurations for the UE based on the energy-saving request. Then, the energy saving configuration determiner 329 may transmit, via the transmitter 312, the determined configuration to the UE through a radio resource control signaling.

The power module 308 can include a power source such as one or more batteries, and a power regulator, to provide regulated power to each of the above-described modules in FIG. 3. In some embodiments, if the BS 300 is coupled to a dedicated external power source (e.g., a wall electrical outlet), the power module 308 can include a transformer and a power regulator.

The various modules discussed above are coupled together by a bus system 330. The bus system 330 can include a data bus and, for example, a power bus, a control signal bus, and/or a status signal bus in addition to the data bus. It is understood that the modules of the BS 300 can be operatively coupled to one another using any suitable techniques and mediums.

Although a number of separate modules or components are illustrated in FIG. 3, persons of ordinary skill in the art will understand that one or more of the modules can be combined or commonly implemented. For example, the processor 304 can implement not only the functionality described above with respect to the processor 304, but also implement the functionality described above with respect to the configuration information generator 320. Conversely, each of the modules illustrated in FIG. 3 can be implemented using a plurality of separate components or elements.

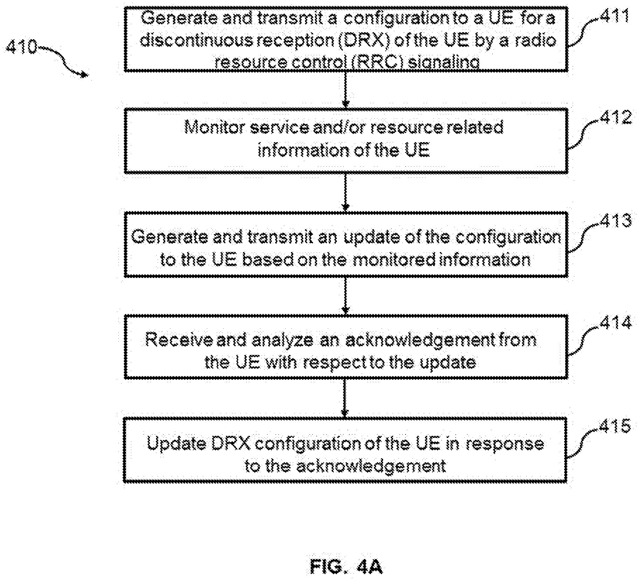

FIG. 4A illustrates a flow chart for a method 410 performed by a BS, e.g. the BS 300 in FIG. 3, for configuring DRX, in accordance with some embodiments of the present disclosure. At operation 411, the BS generates and transmits a configuration to a UE for a discontinuous reception (DRX) of the UE by a radio resource control (RRC) signaling. At operation 412, the BS monitors service and/or resource related information of the UE. At operation 413, the BS generates and transmits an update of the configuration to the UE based on the monitored information. At operation 414, the BS receives and analyzes an acknowledgement from the UE with respect to the update. At operation 415, the BS updates DRX configuration of the UE in response to the acknowledgement.

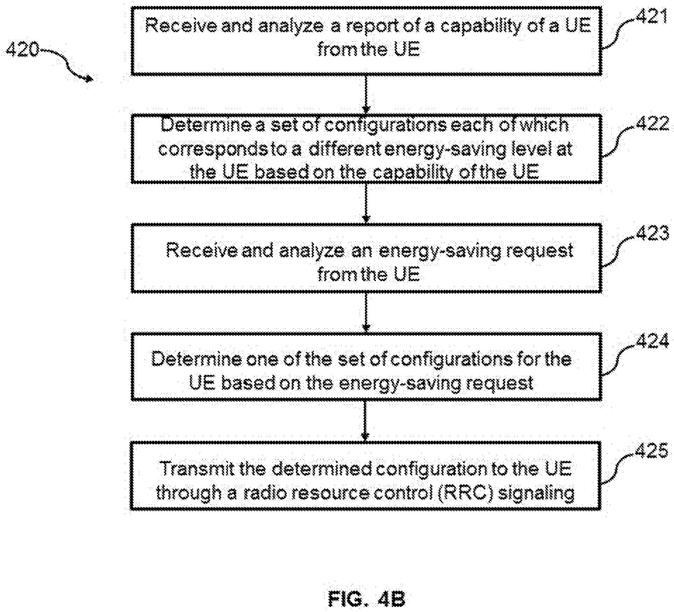

FIG. 4B illustrates a flow chart for a method 420 performed by a BS, e.g. the BS 300 in FIG. 3, for configuring an energy-saving state, in accordance with some embodiments of the present disclosure. At operation 421, the BS receives and analyzes a report of a capability of a UE from the UE. At operation 422, the BS determines a set of configurations each of which corresponds to a different energy-saving level at the UE based on the capability of the UE. At operation 423, the BS receives and analyzes an energy-saving request from the UE. At operation 424, the BS determines one of the set of configurations for the UE based on the energy-saving request. At operation 425, the BS transmits the determined configuration to the UE through a radio resource control (RRC) signaling.

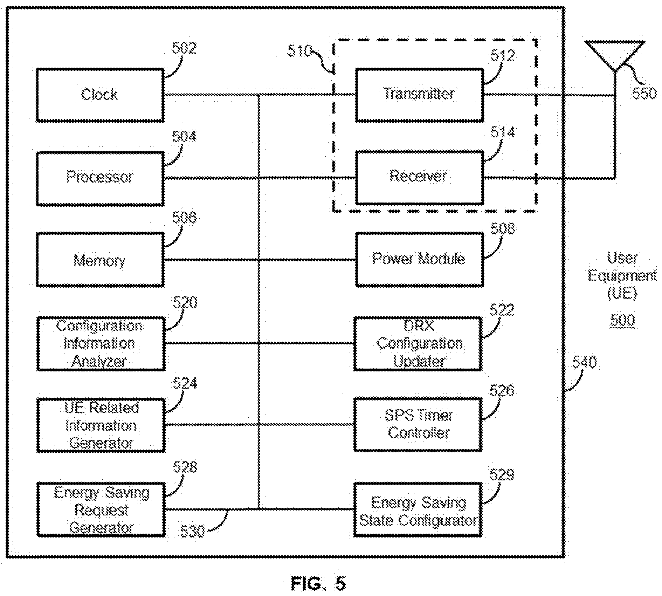

FIG. 5 illustrates a block diagram of a user equipment (UE) 500, in accordance with some embodiments of the present disclosure. The UE 500 is an example of a device that can be configured to implement the various methods described herein. As shown in FIG. 5, the UE 500 includes a housing 540 containing a system clock 502, a processor 504, a memory 506, a transceiver 510 comprising a transmitter 512 and a receiver 514, a power module 508, a configuration information analyzer 520, a DRX configuration updater 522, a UE related information generator 524, an SPS timer controller 526, an energy saving request generator 528, and an energy saving sate configurator 529.

In this embodiment, the system clock 502, the processor 504, the memory 506, the transceiver 510 and the power module 508 work similarly to the system clock 302, the processor 304, the memory 306, the transceiver 310 and the power module 308 in the BS 300. An antenna 550 or a multi-antenna array 550 is typically attached to the housing 440 and electrically coupled to the transceiver 510.

In a communication system, the UE 500 may be associated with a BS. A DRX mechanism may be configured for the UE to save energy at the UE 500. In one embodiment, the configuration information analyzer 520 may receive, via the receiver 514, first configuration information from the BS. The first configuration information comprises at least one parameter related to a DRX of the UE 500. Then, the configuration information analyzer 520 may receive, via the receiver 514, second configuration information from the BS. The second configuration information comprises an update to at least part of the first configuration information. The update may be due to a change of a service type of the UE 500. In one embodiment, the first configuration information is transmitted at a layer higher than a layer at which the second configuration information is transmitted. For example, the first configuration information is carried by RRC signaling; and the second configuration information is carried by a DCI via a PDCCH. As used herein, the term "layer" refers to an abstraction layer of a layered model, e.g. the open systems interconnection (OSI) model, which partitions a communication system into abstraction layers. A layer serves the next higher layer above it, and is served by the next lower layer below it. In the example of FIG. 5, following the OSI model, the second configuration information may be transmitted at the physical layer; while the first configuration information may be transmitted at a layer higher than the physical layer, e.g. at the network layer.

In one embodiment, the configuration information analyzer 520 receives, via the receiver 514 from the BS by RRC signaling, a set of configurations related to the DRX of the UE 500. The second configuration information received by the UE 500 indicates one of the set of configurations for updating the DRX configuration at the UE 500. In another embodiment, the configuration information analyzer 520 receives, via the receiver 514, a modification step size for at least one parameter related to DRX. The second configuration information received by the UE 500 indicates an update to the at least one parameter according to the modification step size. In yet another embodiment, the second configuration information indicates a closure of the DRX at the UE 500.

In one embodiment, the DCI carrying the second configuration information indicates a command to shorten an ON Duration of a DRX cycle. In this case, even if the UE 500 misses the DCI used for adjusting the DRX parameter, the UE 500 will only mistakenly believe that part of the OFF Duration is ON Duration, which will not affect the data transmission and reception of the UE 500.

The configuration information analyzer 520 in this example may inform the DRX configuration updater 522 about the update, such that the DRX configuration updater 522 can update the DRX configuration and transmit a feedback to the BS. In one embodiment, the DRX configuration updater 522 may generate and transmit, via the transmitter 512, an acknowledgement (ACK) to the BS with respect to the update. The DRX configuration updater 522 can update the DRX configuration of the UE 500 according to the second configuration information. In this way, the BS and the UE 500 have consistent understanding of DRX parameters.

According to various embodiments, an effective time of the update starts from at least one of: a next time slot after the UE 500 receives the second configuration information, and a next DRX cycle after the UE 500 receives the second configuration information. The update may be effective until at least one of: an end of a DRX cycle where the effective time starts, and a next update related to the DRX of the UE 500.

The UE related information generator 524 in this example can generate information related to the UE 500. For example, the information related to the UE may include: a service type of the UE 500, an active bandwidth part (BWP) of the UE 500. Accordingly, the UE related information generator 524 may determine there is a change of the service type of the UE 500, or there is a change of the active BWP of the UE 500. The UE related information generator 524 may inform the determined change to the BS for generating the update information of the DRX configuration. Alternatively, the BS may keep monitoring the information related to the UE 500 to generate DRX configuration update and there is no need for the UE 500 to inform the BS. According to various embodiments, the update includes information about at least one of: a reset of all timers related to DRX; a modification of at least one of a timer duration and a timer step related to DRX; and an instruction for the UE 500 to select at least one of a timer duration and a timer step related to DRX based on at least one of: a semi-static configuration from the BS, and a bandwidth ratio between an old active BWP before the change and a new active BWP after the change.

The SPS timer controller 526 in this example can determine and control an SPS timer at the UE 500. In one example, the SPS timer controller 526 may start the SPS timer in response to at least one of: no detection of data in consecutive N time units on SPS resource by the UE 500, and an activation of SPS physical downlink control channel (PDCCH). A time unit may be a mini-slot, a slot, a subframe or an SPS periodicity. The SPS timer controller 526 may stop a detection of SPS physical downlink shared channel (PDSCH) in response to a fact that the UE 500 is in an OFF Duration of a DRX cycle at an end of the SPS timer.

In one embodiment, the SPS timer controller 526 may receive, via the receiver 514, an activation indication on SPS resource during an OFF Duration of a DRX cycle from the BS. The activation indication includes an activation downlink control information (DCI) and a wake-up signal (WUS). In another example, the SPS timer controller 526 may receive, via the receiver 514, a deactivation indication on SPS resource during an OFF Duration of a DRX cycle from the BS. The deactivation indication includes a deactivation DCI and a go-to-sleep signal.

The energy saving request generator 528 in this example generates and transmits, via the transmitter 512, an energy-saving request to the BS. The energy-saving request may be initiated by at least one of: the UE 500 itself and a user of the UE 500. The energy-saving request is transmitted by at least one of: a radio resource control signaling, a service request (SR), a channel state information (CSI) report, and a dedicated signaling for energy-saving request.

The energy saving sate configurator 529 in this example may receive, via the receiver 514, a configuration from the BS, e.g. through a radio resource control signaling. The configuration is selected by the BS from a set of configurations based on the energy-saving request. Each of the set of configurations corresponds to a different energy-saving level at the UE 500. In one embodiment, the UE related information generator 524 may generate and transmit, via the transmitter 512, a report of a capability of the UE 500 to the BS. The set of configurations is determined by the BS based on the capability of the UE. In one embodiment, the set of configurations includes at least one configuration that indicates no need of energy saving at the UE 500. After receiving the configuration from the BS, the energy saving sate configurator 529 may enable the UE 500 to enter an energy-saving state according to the configuration.

The various modules discussed above are coupled together by a bus system 530. The bus system 530 can include a data bus and, for example, a power bus, a control signal bus, and/or a status signal bus in addition to the data bus. It is understood that the modules of the UE 500 can be operatively coupled to one another using any suitable techniques and mediums.

Although a number of separate modules or components are illustrated in FIG. 5, persons of ordinary skill in the art will understand that one or more of the modules can be combined or commonly implemented. For example, the processor 504 can implement not only the functionality described above with respect to the processor 504, but also implement the functionality described above with respect to the configuration information analyzer 520. Conversely, each of the modules illustrated in FIG. 5 can be implemented using a plurality of separate components or elements.

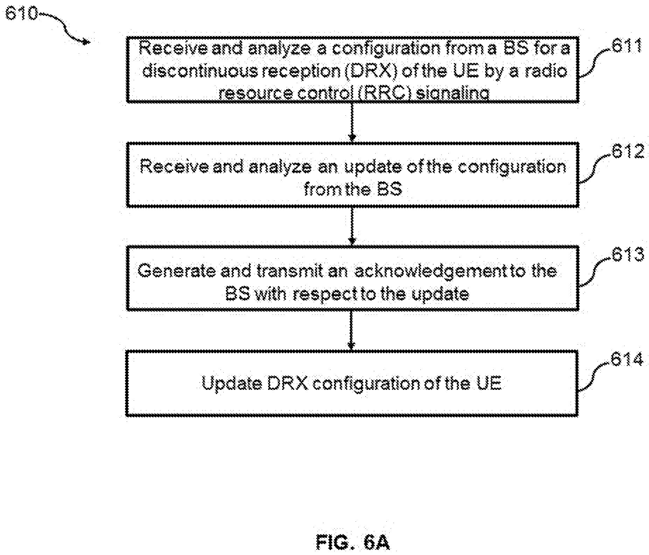

FIG. 6A illustrates a flow chart for a method 610 performed by a UE, e.g. the UE 500 in FIG. 5, for configuring DRX, in accordance with some embodiments of the present disclosure. At operation 611, the UE receives and analyzes a configuration from a BS for a discontinuous reception (DRX) of the UE by a radio resource control (RRC) signaling. At operation 612, the UE receives and analyzes an update of the configuration from the BS. At operation 613, the UE generates and transmits an acknowledgement to the BS with respect to the update. At operation 614, the UE updates DRX configuration of the UE.

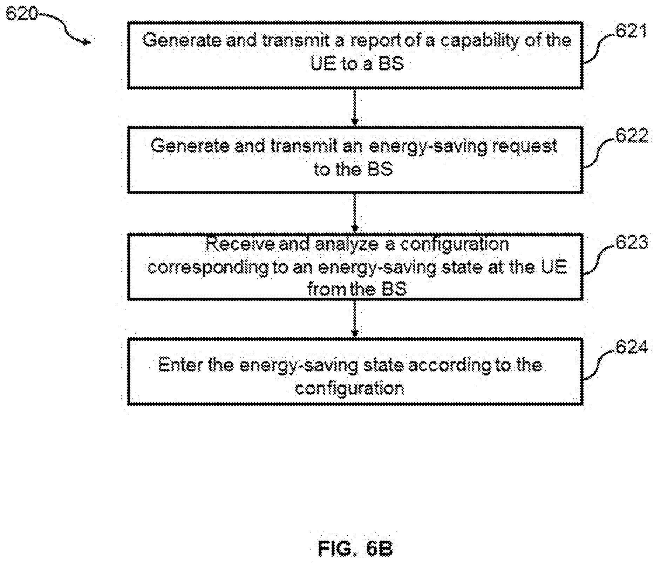

FIG. 6B illustrates a flow chart for a method 620 performed by a UE, e.g. the UE 500 in FIG. 5, for configuring an energy-saving state, in accordance with some embodiments of the present disclosure. At operation 621, the UE generates and transmits a report of a capability of the UE to a BS. At operation 622, the UE generates and transmits an energy-saving request to the BS. At operation 623, the UE receives and analyzes a configuration corresponding to an energy-saving state at the UE from the BS. At operation 624, the UE enters the energy-saving state according to the configuration.

Different embodiments of the present disclosure will now be described in detail hereinafter. It is noted that the features of the embodiments and examples in the present disclosure may be combined with each other in any manner without conflict.

In a first embodiment, a dynamic DRX adjustment mechanism is proposed. The parameters of the DRX are currently configured by RRC signaling. Its configuration process has a large delay and a large signaling consumption. It is very difficult, if not impossible, for the existing DRX mechanism to dynamically adjust the DRX configuration according to the type of service. A dynamic DRX adjustment mechanism is thereby introduced. After the RRC configures the DRX parameters for the UE, the dynamic DRX adjustment mechanism may dynamically update all or part of the parameters of the DRX according to the UE service type. The information for dynamically adjusting the DRX configuration is carried on the PDCCH. The system can create a new DCI format for dynamic DRX configuration information, or add a field to the existing DCI format to carry the dynamic DRX configuration information. Since the UE receives the PDCCH and blindly detects the DCI only during the ON Duration, the DCI carrying the DRX configuration information is sent to the UE during the ON Duration. The DRX configuration information includes at least one of the following parameters: drx-InactivityTimer; onDurationTimer; shortDRX-Cycle; longDRX-Cycle; drxStartOffset; drxShortCycleTimer; DRX function turned on; and DRX function turned off.

The effect starting time and effective time of the DRX dynamic configuration may be defined as below. The effect starting time represents the time when the new DRX configuration takes effect after the UE receives the DRX dynamic configuration information. The effective time represents the time period when the new DRX configuration continues to be effective after the UE receives the DRX dynamic configuration information. After the effective time ends, the UE continues to use the DRX parameters configured by the RRC.

In one example, according to Effect Starting Time 1, the DRX new configuration takes effect from the next time slot after receiving the PDCCH carrying the DRX configuration information. In another example, according to Effect Starting Time 2, the DRX new configuration takes effect from the next DRX cycle after receiving the PDCCH carrying the DRX configuration information. In one example, according to Effective Time 1, the DRX configuration information carried in the PDCCH is valid or effective only for the DRX cycle where the effect starting time is. In another example, according to Effective Time 2, the DRX configuration information carried in the PDCCH is valid or effective for the DRX cycle where the effect starting time is and the subsequent DRX cycle(s) until next DRX configuration information received by the UE.

The effect starting time and effective time of different DRX parameters can be configured differently. However, the base station and the UE should have the same understanding of the effect starting time and effective time. The system can stipulate the effect starting time and effective time of each parameter in the protocol, and can also notify the UE of the effect starting time and effective time of each parameter through RRC signaling. In one example, the following table lists the configuration of the effect starting time and effective time of different parameters.

| Parameter | Effect Starting Time | Effective Time |
|---|---|---|
| drx-InactivityTimer | Effect Starting Time 1 | Effective Time 1 |
| onDurationTimer | Effect Starting Time 1 | Effective Time 1 |
| shortDRX-Cycle | Effect Starting Time 2 | Effective Time 2 |
| longDRX-Cycle | Effect Starting Time 2 | Effective Time 2 |
| drxStartOffset | Effect Starting Time 2 | Effective Time 2 |
| drxShortCycleTimer | Effect Starting Time 2 | Effective Time 2 |
| DRX function turned on or off | Effect Starting Time 2 | Effective Time 2 |

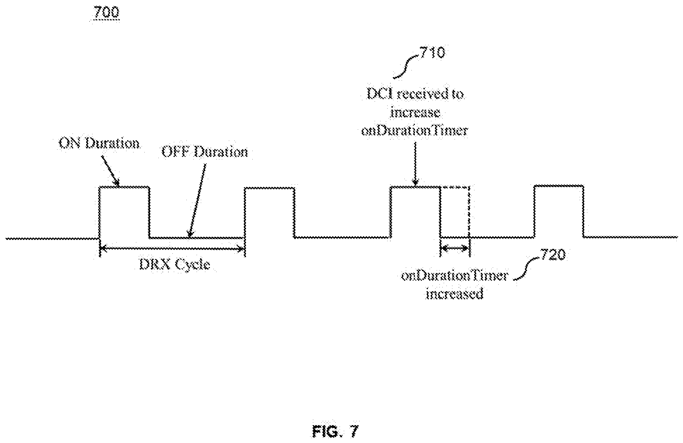

FIG. 7 illustrates an exemplary adjustment mechanism 700 for DRX, in accordance with some embodiments of the present disclosure. As shown in FIG. 7, the UE receives the DCI 710 for increasing the duration of the onDurationTimer during the DRX ON Duration. The UE immediately extends the ON Duration of the current DRX cycle and the increased onDurationTimer 720 is valid only for the current DRX cycle. The corresponding effect starting time is configured as the Effect Starting Time 1. The corresponding effective time is configured as the Effective Time 1.

The following two exemplary modes can be used to illustrate details on how to change the DRX configuration by the DRX configuration bit information carried in the DCI.

In Mode 1: RRC pre-configures a set of DRX parameters; and DCI dynamically selects DRX configuration. In this mode, the RRC configures multiple DRX configuration sets, and adds N-bit information to the PDCCH for dynamically selecting the DRX configuration. A new DCI format may be created for the N-bit DRX configuration information, or a field may be added to the existing DCI format for carrying the N-bit DRX configuration information. For example, RRC signaling pre-defines four DRX configurations for the UE. The main parameters of the four DRX configurations are shown in the following table.

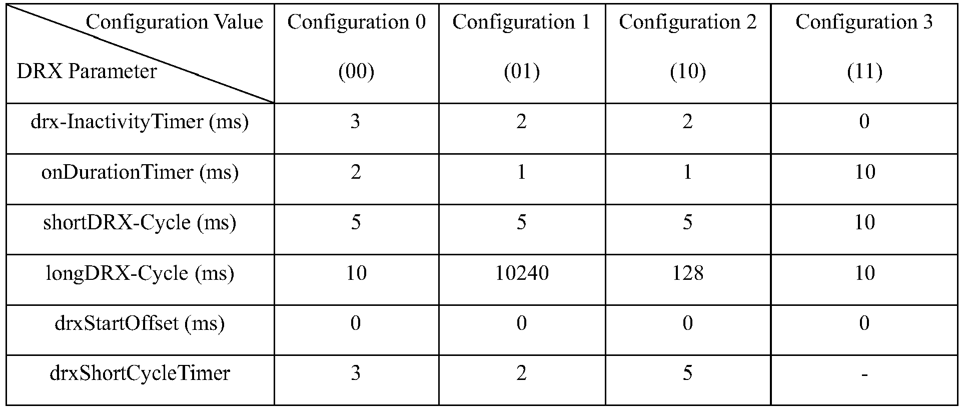

In the above table, the Configuration 3 corresponds to a configuration when the UE continues to be in the ON Duration state, and is applicable to a scenario in which a large number of semi-persistent scheduling (SPS) services or ultra-reliable low latency communication (URLLC) services are provided. The Configuration 2 corresponds to a configuration when the UE is in the OFF Duration state for a long time, and is applicable to a scenario in which a small amount of traffic is provided. The Configuration 1 is applicable to a scenario with extremely low traffic. The Configuration 0 is applicable to normal service scenarios. The system can represent these four DCI configurations with 2 bits, assuming that "00" stands for Configuration 0, "01" stands for Configuration 1, "10" stands for Configuration 2, and "11" stands for Configuration 3. The system can add a 2-bit field "DRX-Config" to the existing DCI format to refer to the dynamic selection of the DRX configuration. For example, when the URLLC traffic of the UE is large, the base station can configure the DRX-Config field to be 11 in the DCI; and the UE switches the DRX configuration to Configuration 3 after receiving the DCI.

In Mode 2: an adjustment step size is pre-configured, such that DCI dynamically changes the duration of onDurationTimer, shortDRX-Cycle, and/or longDRX-Cycle according to the adjustment step size. In this mode, the RRC pre-configures a DRX configuration table and adjustment step size, or the protocol can specify a default DRX configuration table and step size. The table defines a number of different DRX behaviors. The DRX behaviors contained in the table may include at least one of the following behaviors: to extend the duration of onDurationTimer by one step at a time; to reduce the duration of onDurationTimer by one step at a time; to extend the duration of shortDRX-Cycle by one step at a time; to shorten the duration of shortDRX-Cycle by one step at a time; to extend the duration of longDRX-Cycle by one step at a time; and to shorten the duration of longDRX-Cycle by one step at a time. Optionally, one of the states or behaviors is to turn off the DRX configuration, i.e. the UE is always at ON Duration. Optionally, one of the states or behaviors is to enter the OFF Duration after waiting for x ms. During this waiting time of x ms, the UE does not start the drx-InactivityTimer even if the DCI is blindly detected.

For example, the protocol may specify a default DRX configuration table and sets the step size to be 5 ms. As shown in the following table, the index 0 of the table indicates that the ON Duration is extended for 5 ms; the index 1 of the table indicates that the ON Duration is shortened by 5 ms; the table index 2 indicates that the UE enters the OFF Duration after 5 ms; and the table index 3 indicates that the DRX function is disabled.

| Index | DRX Behavior |
|---|---|
| 0 (00) | To increase onDurationTimer by 5 ms |
| 1 (01) | To reduce onDurationTimer by 5 ms |
| 2 (10) | To enter OFF Duration after 5 ms |
| 3 (11) | To close the DRX function |

Further, the DRX Timer can be set for one-way adjustment. After the RRC configures a step size or the base station and the UE agree on a step size, the system carries one bit information in the PDCCH to indicate an adjustment of the DRX Timer. After receiving the one bit information, the UE adds (or reduces) a step size to the DRX Timer. For example, the base station configures the DRX onDurationTimer of the UE to have a step size of 5 ms by RRC, and newly defines a field onDurationTimerIncrease in the DCI format to indicate an increase of the onDurationTimer. When the UE parses out that the field onDurationTimerIncrease in the DCI has a value 1, the UE increases the onDurationTimer by 5 ms. When the UE parses out that the field onDurationTimerIncrease in the DCI has a value 0 or the field does not exist, the UE keeps the onDurationTimer unchanged.

In one embodiment, the base station adjusts the DRX parameters through the DCI. If the UE misses the DCI, the base station and the UE have inconsistent understanding of DRX parameters. In order to avoid the influence of the inconsistent understanding between the base station and the UE on the DRX parameters, the following optimization means are proposed. In a first mean, the UE feeds back with respect to the DCI or performs HARQ feedback on the service data scheduled by the DCI. If the base station does not receive the ACK feedback, the base station does not update the DRX parameter. In a second mean, the DCI only issues commands with a shortened ON Duration. The base station does not send the PDCCH to the UE during the OFF Duration. Therefore, even if the UE misses the DCI used for adjusting the DRX parameter, the UE will only mistakenly believe that part of the OFF Duration is ON Duration, which will not affect the data transmission and reception of the UE.

In a second embodiment, UE can autonomously trigger a switch between energy-saving states. The DRX mechanism helps the UE to save energy, but also affects the delay and throughput of the UE communication to some extent. In order to reduce the communication delay of the wireless network and improve the throughput of the network, some operators choose not to configure the DRX function on the base station. In addition, in the current wireless communication system, the configuration for energy saving of the communication system is initiated by the base station. But the base station does not know whether there is a need for energy saving for a given UE. In this embodiment, a scheme is proposed for the UE to autonomously trigger a switch to an energy-saving state.

In one example, after the UE successfully accesses the base station and reports the UE capability to the base station, the base station pre-configures N (N>0, N is an integer) according to the UE capability, and each configuration corresponds to a different energy-saving level. The N configurations include at least one configuration that does not require energy saving at the UE. The configuration for each energy-saving level contains at least one of the following configuration parameters: DRX configuration (onDurationTimer, drx-InactivityTimer, etc.); maximum supported system bandwidth; maximum configurable BWP bandwidth; maximum number of BWPs that can be activated simultaneously; maximum supportable carrier number; maximum number of layers that can be supported; maximum number of supported RF links; maximum number of antennas that can be supported.

The parameters in the N types of energy-saving configurations pre-configured by the base station cannot exceed the capability range of the UE. For example, if the UE displays the maximum supported bandwidth to be 100 M in the capability report, the base station configures the maximum supported system bandwidth of the UE to be no greater than 100 M.

Optionally, before the UE sends a power saving request to the base station, the base station configures, by default, the configuration that does not need to perform energy saving. When the UE sends a power saving request to the base station, the base station updates the configuration for the UE according to the energy saving level requested by the UE.

There may be two ways to trigger the UE to initiate an energy saving request. In one example, the UE automatically initiates an energy saving request according to information such as its own power and/or its own service status. In another example, the user chooses to initiate an energy saving request through the operating system or the application software on the operating system.

The energy saving request of the UE can be carried on any one of the following resources. In a first example, the energy saving request of the UE may be encapsulated in the RRC UE Assistance Information signaling. The signaling is transmitted to the base station through the PUSCH channel. In a second example, different service request (SR) configurations (5G NR supports up to 8 SRs) represent different levels of power saving requests. The reserved part SR configuration corresponds to different levels of energy saving requests. Further, if it is specified that a certain SR configuration can only be used to trigger the UE to enter the energy saving, or even directly notify the base station that the UE will enter the DRX OFF Duration state after x ms, the base station does not need to send data to the UE in a short time. In a third example, the energy saving request of the UE is carried on the periodic or aperiodic CSI reporting resources. In a fourth example, the base station can configure report resources for the UE to send periodic or non-periodic energy saving requests. If the energy saving request is carried on the periodic reporting resource, the PUCCH is used for sending the energy saving request. When the PUCCH carrying the UE energy saving request collides with the PUCCH carrying other information, it is multiplexed by means of joint coding.

For example, the base station pre-configures two configuration schemes for the UE according to the capability report information of the UE. The Configuration Scheme 0 indicates that the energy-saving configuration is unnecessary; and the Configuration Scheme 1 indicates a configuration of an energy-saving state, as illustrated in the following table.

| Parameter | Configuration Scheme 0 | Configuration Scheme 1 |
|---|---|---|
| DRX onDurationTimer | 5ms | 2ms |
| Maximum supported system bandwidth | 100M | 20M |
| Maximum configurable BWP bandwidth | 100M | 20M |
| Maximum number of BWPs that can be activated simultaneously | 1 | 1 |
| Maximum number of supported carriers | 4 | 1 |
| Maximum number of layers that can be supported | 2 | 1 |
| Maximum number of supported RF links | 2 | 1 |
| Maximum number of antennas that can be supported | 4 | 2 |

In one example, the process for the UE to autonomously trigger the energy-saving state switching is as below. First, a user wants to save energy on the mobile phone, clicks the energy saving option on the operating system and selects a corresponding energy saving level 1. Then, the UE receives the energy saving request of the user and the energy saving level 1, and reports the energy saving level 1 to the base station through the aperiodic CSI. The base station then receives the energy saving level of the UE. The base station then reconfigures the energy related parameters of the UE, and sends the new configuration to the UE through RRC signaling. The UE receives the RRC signaling configuration, and after the new configuration takes effect, the UE enters the energy-saving state. In this example, the energy saving level 1 is merely for reference of the base station. The base station may take the energy saving level 1 into consideration but does not have to follow the energy saving level 1 when performing the energy-saving reconfiguration.

In a third embodiment, a DRX timer may be adjusted based a change of active BWP. In one example, a 5G network can configure up to 4 BWPs per UE. Only one active BWP can be activated at a time in one carrier. When the service demand of the UE changes, the base station can dynamically change the active BWP of the UE to better adapt to the service demand. For example, when the UE has a large number of eMBB service requirements, the base station can adjust the active BWP of the UE to a BWP with a larger bandwidth. When the UE has a large number of URLLC service requirements, the base station can adjust the active BWP of the UE to a BWP with a larger subcarrier spacing. However, the current DRX configuration is UE-Specific, i.e. the DRX configuration does not change dynamically as the BWP changes. That is, after switching to a new active DL BWP, all timers related to DRX continue to be valid. When the BWP of the UE dynamically switches, the current DRX configuration of the UE may not be optimal. If the DRX configuration can be dynamically adjusted as the BWP changes, the DRX will be better able to adapt to the traffic transmission needs.

When the UE is in the ON Duration and the BWP is switched, there may be several exemplary modes. In one mode, when switching to the new active DL BWP, all timers are reset to 0. That is, the starting position of the onDurationTimer is determined according to the drxStartOffset configuration for the new DL BWP. In another mode, after switching to the new active DL BWP, because the BWP bandwidth may change, the previous timer upper limit configuration may no longer be suitable. For example, after switching from a small bandwidth BWP to a large bandwidth BWP, it is likely that the timer length can be configured to be smaller. Therefore, the base station notifies the UE about a method for adjusting the timer duration and/or the timer step; or the UE can determine the method for adjusting the timer duration and/or the timer step according to certain factors.

In one example, the base station notifies the timer duration and/or the timer step by DCI or dedicated RRC signaling. Specifically, the timer configuration and the step size configuration may be updated using the methods disclosed in the first embodiment. In another example, when the base station configures DRX parameters semi-statically, it configures the timer modification step size and/or timer duration for each of the four BWPs. When a BWP switch occurs, the UE selects the timer modification step size and/or the timer upper limit for the newly activated BWP. In yet another example, the UE updates the timer modification step size and/or the timer upper limit according to a bandwidth ratio between the old active BWP and the new active BWP. For example, the bandwidth of the old BWP is 10 M, the onDurationTimer is set to 4 ms, the modification step size is 2 ms, and the bandwidth of the new BWP is 20 M. After the UE switches to the new BWP bandwidth, the onDurationTimer is set to 4ms*(10M/20M) = 2 ms; and the modification step size is changed to 2ms*(10M/20M) = 1 ms.

In a fourth embodiment, an exemplary process of semi-persistent scheduling (SPS) under DRX is proposed. The SPS requires a specific PDCCH for activation and deactivation. After the SPS transmission is activated, the UE can receive the PDSCH data transmitted by the SPS without receiving the PDCCH.

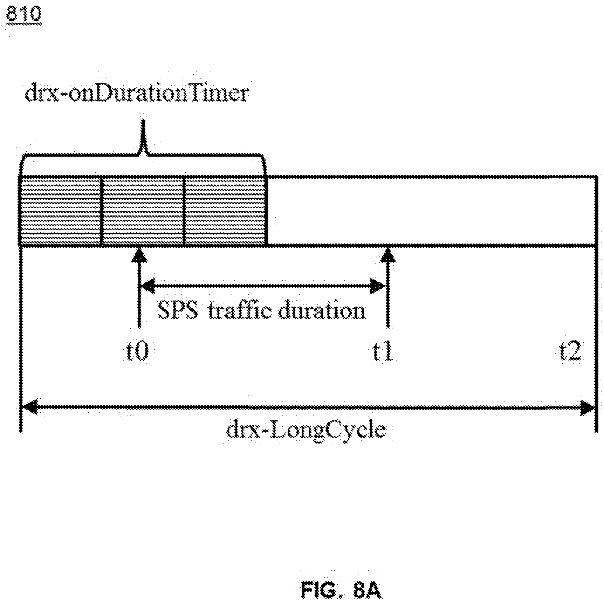

FIG. 8A illustrates an exemplary process 810 of SPS under DRX, in accordance with some embodiments of the present disclosure. According to the current protocol, during the DRX OFF Duration, the UE does not detect the PDCCH, but may receive the SPS PDSCH. As shown in FIG. 8A, the base station triggers SPS activation at time t0, and the SPS service completes transmission at time t0~t1. However, since the UE does not detect the PDCCH between t1 and t2, it cannot deactivate SPS. That is, the UE still needs to detect the SPS PDSCH between t1 and t2, which is not good for energy saving.

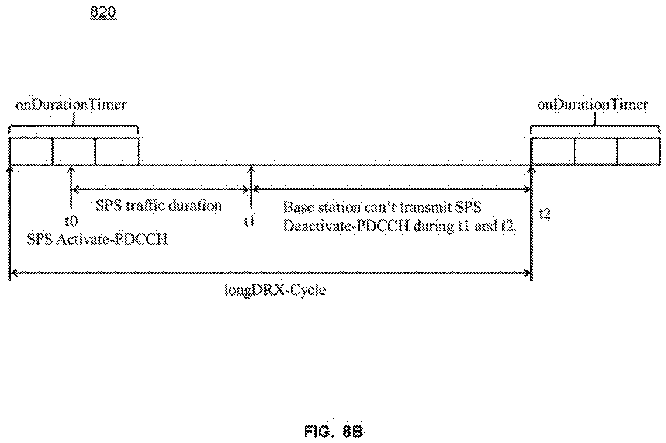

FIG. 8B illustrates another exemplary process 820 of SPS under DRX, in accordance with some embodiments of the present disclosure. In this example, an SPS timer can be defined. When the UE does not detect data in consecutive N, where N>=0, time units on the SPS resource, the SPS timer is started. A time unit can be a mini-slot, a slot, a sub-frame or an SPS periodicity. If the UE is still in the DRX cycle OFF Duration after the timer expires, the UE does not detect the SPS PDSCH. Alternatively, the SPS timer starts counting from the SPS PDCCH activation. If the UE is still in the ON Duration when the timer expires, the UE still detects the SPS PDSCH; if the UE is in the OFF Duration of the DRX cycle when the timer expires, the detection of the SPS PDSCH is stopped.

In another example, the base station is allowed to send an activation indication for activating SPS transmission and a deactivation indication for deactivating SPS transmission on the SPS resources during the DRX OFF Duration. The activation indication includes an activation DCI and an activation signal WUS (Wake-UP Signal); the deactivation indication includes a deactivation DCI and a deactivation signal (Go-to-sleep signal). An energy saving indication signal includes the wake-up signal and the go-to-sleep signal. The base station in this example can transmit suitable DCI and/or the energy saving indication signal on the SPS resource.

In one embodiment, when the UE does not detect data for consecutive N time units on the SPS resource, the UE needs to start detecting the deactivation indication at the (N+1)-th time unit. When the UE detects the deactivation indication, the data is no longer detected on the SPS resource. If no deactivation indication is detected, the SPS data is continuously detected.

In another embodiment, when the UE does not detect data for consecutive N time units on the SPS resource, the UE needs to start detecting the activation indication in the (N+1)-th time unit. When the UE detects the activation indication, the UE needs to continue detecting data on the SPS resource. If no activation indication is detected, the data is no longer detected on the SPS resource.

In a different embodiment, when the DRX and the energy saving indication signal are configured simultaneously, the UE does not expect or request to detect or receive SPS PDSCH during DRX OFF Duration.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques.

To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, module, etc. can be configured to perform one or more of the functions described herein. The term "configured to" or "configured for" as used herein with respect to a specified operation or function refers to a processor, device, component, circuit, structure, machine, module, etc. that is physically constructed, programmed and/or arranged to perform the specified operation or function.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

## Claims

1. A method performed by a wireless communication node (300), the method comprising:
transmitting, at a first layer, first configuration information to a wireless communication device (500), wherein the first configuration information comprises at least one parameter related to a discontinuous reception (DRX) of the wireless communication device (500);
transmitting, at a second layer lower than the first layer, second configuration information to the wireless communication device (500), wherein the second configuration information comprises an update to at least part of the first configuration information; and
determining a modification step size for said DRX related parameter, wherein the second configuration information indicates an update to the at least one parameter according to the modification step size, wherein:
an effective time of the update starts from at least one of: a next time slot after the wireless communication device (500) receives the second configuration information, and a next DRX cycle after the wireless communication device (500) receives the second configuration information; and
the update is effective until at least one of: an end of a DRX cycle where the effective time starts, and a next update related to the DRX of the wireless communication device (500).

2. A method performed by a wireless communication device (500), the method comprising:
receiving, at a first layer, first configuration information from a wireless communication node (300), wherein the first configuration information comprises at least one parameter related to a discontinuous reception (DRX) of the wireless communication device (500);
receiving, at a second layer lower than the first layer, second configuration information from the wireless communication node (300), wherein the second configuration information comprises an update to at least part of the first configuration information; and
determining a modification step size for said DRX related parameter wherein the second configuration information indicates an update to the at least one parameter according to the modification step size, wherein
an effective time of the update starts from at least one of: a next time slot after the wireless communication device (500) receives the second configuration information, and a next DRX cycle after the wireless communication device (500) receives the second configuration information; and
the update is effective until at least one of: an end of a DRX cycle where the effective time starts, and a next update related to the DRX of the wireless communication device (500).

3. The method of claim 1 or 2, wherein the wireless communication device (500) is informed at the first layer about a set of configurations related to the DRX of the wireless communication device (500), and wherein the second configuration information indicates one of the set of configurations

4. The method of claim 1 or 2, wherein the second configuration information indicates a closure of the DRX at the wireless communication device (500).

5. The method of claim 1 or 2, wherein the update is determined based on a change of an active bandwidth part (BWP) of the wireless communication device (500), and
wherein the update includes information about at least one of:
a reset of all timers related to DRX;
a modification of at least one of a timer duration and a timer step related to DRX; and
an instruction for the wireless communication device (500) to select at least one of a timer duration and a timer step related to DRX based on at least one of: a semi-static configuration from the wireless communication node (300), and a bandwidth ratio between an old active BWP before the change and a new active BWP after the change.

6. The method of claim 1 or 2, wherein:
the first configuration information is carried by a radio resource control signaling; and
the second configuration information is carried by downlink control information (DCI) via a physical downlink control channel (PDCCH),
the DCI indicates a command to shorten an ON Duration of a DRX cycle.

7. The method of claim 1 or 2, wherein an acknowledgement (ACK) is transmitted from the wireless communication device (500) to the wireless communication node (300) with respect to the update; and
wherein the method further comprising:
updating DRX configuration of the wireless communication device (500) according to the second configuration information in response to the ACK.

8. A wireless communication node (300) configured to carry out the method of any one of claims 1, 3 to 7.

9. A wireless communication device (500) configured to carry out the method of any one of claims 2 to 7.

10. A non-transitory computer-readable medium having stored thereon computer-executable instructions for carrying out the method of any one of claims 1 through 7.

## Patentansprüche

1. Verfahren, das von einem drahtlosen Kommunikationsknoten (300) ausgeführt wird, wobei das Verfahren aufweist:
Senden, auf einer ersten Schicht, von ersten Konfigurationsinformationen an eine drahtlose Kommunikationsvorrichtung (500), wobei die ersten Konfigurationsinformationen mindestens einen Parameter aufweisen, der einen diskontinuierlichen Empfang (DRX) der drahtlosen Kommunikationsvorrichtung (500) betrifft;
Senden, auf einer zweiten Schicht, die niedriger als die erste Schicht ist, von zweiten Konfigurationsinformationen an die drahtlose Kommunikationsvorrichtung (500), wobei die zweiten Konfigurationsinformationen eine Aktualisierung von mindestens einem Teil der ersten Konfigurationsinformationen aufweisen; und
Bestimmen einer Modifikationsschrittgröße für den DRX-betreffenden Parameter, wobei die zweiten Konfigurationsinformationen eine Aktualisierung des mindestens einen Parameters gemäß der Modifikationsschrittgröße anzeigen, wobei:
eine effektive Zeit der Aktualisierung an mindestens einem beginnt von: einem nächsten Zeitschlitz, nachdem die drahtlose Kommunikationsvorrichtung (500) die zweiten Konfigurationsinformationen empfängt, und einem nächsten DRX-Zyklus, nachdem die drahtlose Kommunikationsvorrichtung (500) die zweiten Konfigurationsinformationen empfängt; und
die Aktualisierung effektiv ist, bis zu mindestens einem von: einem Ende eines DRX-Zyklus, an dem die effektive Zeit beginnt, und einer nächsten Aktualisierung, die den DRX der drahtlosen Kommunikationsvorrichtung (500) betrifft.

2. Verfahren, das von einer drahtlosen Kommunikationsvorrichtung (500) ausgeführt wird, wobei das Verfahren aufweist:
Empfangen, auf einer ersten Schicht, von ersten Konfigurationsinformationen von einem drahtlosen Kommunikationsknoten (300), wobei die ersten Konfigurationsinformationen mindestens einen Parameter aufweisen, der einen diskontinuierlichen Empfang (DRX) der drahtlosen Kommunikationsvorrichtung (500) betrifft;
Empfangen, auf einer zweiten Schicht, die niedriger als die erste Schicht ist, von zweiten Konfigurationsinformationen von dem drahtlosen Kommunikationsknoten (300), wobei die zweiten Konfigurationsinformationen eine Aktualisierung von mindestens einem Teil der ersten Konfigurationsinformationen aufweisen; und
Bestimmen einer Modifikationsschrittgröße für den DRX-betreffenden Parameter, wobei die zweiten Konfigurationsinformationen eine Aktualisierung des mindestens einen Parameters gemäß der Modifikationsschrittgröße anzeigen, wobei eine effektive Zeit der Aktualisierung an mindestens einem beginnt von: einem nächsten Zeitschlitz, nachdem die drahtlose Kommunikationsvorrichtung (500) die zweiten Konfigurationsinformationen empfängt, und einem nächsten DRX-Zyklus, nachdem die drahtlose Kommunikationsvorrichtung (500) die zweiten Konfigurationsinformationen empfängt; und
die Aktualisierung effektiv ist, bis zu mindestens einem von: einem Ende eines DRX-Zyklus, in dem die effektive Zeit beginnt, und einer nächsten Aktualisierung, die den DRX der drahtlosen Kommunikationsvorrichtung (500) betrifft.

3. Verfahren nach Anspruch 1 oder 2, wobei die drahtlose Kommunikationsvorrichtung (500) auf der ersten Schicht über einen Satz von Konfigurationen informiert wird, die den DRX der drahtlosen Kommunikationsvorrichtung (500) betreffen, und wobei die zweiten Konfigurationsinformationen eine des Satzes der Konfigurationen anzeigen.

4. Verfahren nach Anspruch 1 oder 2, wobei die zweiten Konfigurationsinformationen eine Schließung des DRX an der drahtlosen Kommunikationsvorrichtung (500) anzeigen.

5. Verfahren nach Anspruch 1 oder 2, wobei die Aktualisierung basierend auf einer Änderung eines aktiven Bandbreitenteils (BWP) der drahtlosen Kommunikationsvorrichtung (500) bestimmt wird, und
wobei die Aktualisierung Informationen über mindestens eines enthält von:
einem Zurücksetzen aller Zeitgeber, die den DRX betreffen;
einer Modifikation einer Zeitgeberdauer und/oder eines Zeitgeberschritts betreffend den DRX; und
eine Anweisung für die drahtlose Kommunikationsvorrichtung (500), mindestens eine Zeitgeberdauer und einen Zeitgeberschritts betreffend den DRX auszuwählen, basierend auf mindestens einer halbstatischen Konfiguration von dem drahtlosen Kommunikationsknoten (300) und einem Bandbreitenverhältnis zwischen einem alten aktiven BWP vor der Änderung und einem neuen aktiven BWP nach der Änderung.

6. Verfahren nach Anspruch 1 oder 2, wobei:
die ersten Konfigurationsinformationen durch eine Funkressourcen-Steuerungssignalisierung übertragen werden; und
die zweiten Konfigurationsinformationen durch Downlink-Steuerinformation (DCI) über einen physikalischen Downlink-Steuerkanal (PDCCH) übertragen werden,
die DCI einen Befehl anzeigen, eine EIN-Dauer eines DRX-Zyklus zu verkürzen.

7. Verfahren nach Anspruch 1 oder 2, wobei eine Bestätigung (ACK) von der drahtlosen Kommunikationsvorrichtung (500) zu dem drahtlosen Kommunikationsknoten (300) in Bezug auf die Aktualisierung übertragen wird; und
wobei das Verfahren ferner aufweist:
Aktualisieren der DRX-Konfiguration der drahtlosen Kommunikationsvorrichtung (500) gemäß den zweiten Konfigurationsinformationen als Reaktion auf die ACK.

8. Drahtloser Kommunikationsknoten (300), der konfiguriert ist, das Verfahren nach einem der Ansprüche 1, 3 bis 7 auszuführen.

9. Drahtlose Kommunikationsvorrichtung (500), die konfiguriert ist, das Verfahren nach einem der Ansprüche 2 bis 7 auszuführen.

10. Nichtflüchtiges, computerlesbares Medium, auf dem computerausführbare Befehle zum Ausführen des Verfahrens nach einem der Ansprüche 1 bis 7 gespeichert sind.

## Revendications

1. Procédé exécuté par un noeud de communication sans fil (300), ledit procédé comprenant :
la transmission, sur une première couche, de premières informations de configuration à un dispositif de communication sans fil (500), lesdites premières informations de configuration comprenant au moins un paramètre relatif à une réception discontinue (DRX) du dispositif de communication sans fil (500) ;
la transmission, sur une deuxième couche inférieure à la première couche, de deuxièmes informations de configuration au dispositif de communication sans fil (500), lesdites deuxièmes informations de configuration comprenant une mise à jour d'au moins une partie des premières informations de configuration ; et
la détermination d'une grandeur d'étape de modification pour le paramètre relatif à la DRX, les deuxièmes informations de configuration indiquant une mise à jour dudit au moins un paramètre en fonction de la grandeur d'étape de modification, où :
un temps effectif de la mise à jour part : d'un créneau temporel suivant après réception par le dispositif de communication sans fil (500) des deuxièmes informations de configuration et/ou d'un cycle DRX suivant après réception par le dispositif de communication sans fil (500) des deuxièmes informations de configuration ; et
la mise à jour est effective jusqu'à : une fin d'un cycle DRX où commence le temps effectif et/ou une mise à jour suivante relative à la DRX du dispositif de communication sans fil (500).

2. Procédé exécuté par un dispositif de communication sans fil (500), ledit procédé comprenant :
la réception, sur une première couche, de premières informations de configuration provenant d'un noeud de communication sans fil (300), lesdites premières informations de configuration comprenant au moins un paramètre relatif à une réception discontinue (DRX) du dispositif de communication sans fil (500) ;
la réception, sur une deuxième couche inférieure à la première couche, de deuxièmes informations de configuration provenant du noeud de communication sans fil (300), lesdites deuxièmes informations de configuration comprenant une mise à jour d'au moins une partie des premières informations de configuration ; et
la détermination d'une grandeur d'étape de modification pour le paramètre relatif à la DRX, les deuxièmes informations de configuration indiquant une mise à jour dudit au moins un paramètre en fonction de la grandeur d'étape de modification, où un temps effectif de la mise à jour part : d'un créneau temporel suivant après réception par le dispositif de communication sans fil (500) des deuxièmes informations de configuration et/ou d'un cycle DRX suivant après réception par le dispositif de communication sans fil (500) des deuxièmes informations de configuration ; et
la mise à jour est effective jusqu'à : une fin d'un cycle DRX où commence le temps effectif et/ou une mise à jour suivante relative à la DRX du dispositif de communication sans fil (500).

3. Procédé selon la revendication 1 ou la revendication 2, où le dispositif de communication sans fil (500) est informé sur la première couche d'un ensemble de configurations relatif à la DRX du dispositif de communication sans fil (500), et où les deuxièmes informations de configuration indiquent un ensemble de configurations.

4. Procédé selon la revendication 1 ou la revendication 2, où les deuxièmes informations de configuration indiquent une clôture de la DRX sur le dispositif de communication sans fil (500).

5. Procédé selon la revendication 1 ou la revendication 2, où la mise à jour est déterminée sur la base d'un changement d'une partie de bande passante active (BWP) du dispositif de communication sans fil (500), et
où la mise à jour comprend des informations sur :
une réinitialisation de toutes les temporisations relatives à la DRX ; et/ou une modification d'une durée de temporisation et/ou d'une étape de temporisation relatives à la DRX ; et/ou
une instruction de sélection par le dispositif de communication sans fil (500) d'une durée de temporisation et/ou d'une étape de temporisation relatives à la DRX sur la base d'une configuration semi-statique par le noeud de communication sans fil (300) et/ou d'un rapport de largeurs de bande entre une ancienne BWP active avant le changement et une nouvelle BWP active après le changement.

6. Procédé selon la revendication 1 ou la revendication 2, où :
les premières informations de configuration sont transportées par une signalisation de commande de ressources radio ; et
les deuxièmes informations de configuration sont transportées par des informations de commande de liaison descendante (DCI) via un canal de commande de liaison descendante physique (PDCCH),
les DCI indiquent une instruction de raccourcissement d'une durée ON d'un cycle DRX.

7. Procédé selon la revendication 1 ou la revendication 2, où un accusé de réception (ACK) est transmis du dispositif de communication sans fil (500) au noeud de communication sans fil (300) relativement à la mise à jour ; et
où ledit procédé comprend en outre :
la mise à jour de la configuration DRX du dispositif de communication sans fil (500) en fonction des deuxièmes informations de configuration en réponse à l'ACK.

8. Noeud de communication sans fil (300), configuré pour exécuter le procédé selon l'une des revendications 1, 3 à 7.

9. Dispositif de communication sans fil (500), configuré pour exécuter le procédé selon l'une des revendications 2 à 7.

10. Support d'enregistrement non transitoire lisible par ordinateur, où sont stockées des instructions exécutables par ordinateur pour l'exécution du procédé selon l'une des revendications 1 à 7.
